# EUROPEAN PATENT SPECIFICATION

(11) **EP 0 570 941 B1**
(45) Date of publication and mention of the grant of the patent: **27.03.1996**
(21) Application number: 93108182.2
(22) Date of filing: 19.05.1993
(51) Int. Cl.: H01S 3/06, H01S 3/094, H01S 3/102, H04B 10/16

(54) **Optical fiber amplifier**
Faseroptischer Verstärker
Amplificateur à fibre optique

(30) Priority: 21.05.1992 JP 128780/92
(43) Date of publication of application: 24.11.1993
(73) Proprietor: SUMITOMO ELECTRIC INDUSTRIES, LIMITED, Osaka 541 (JP)
(72) Inventor: Nishimura, Masayuki, c/o Yokohama Works of, Yokohama-shi, Kanagawa (JP); Kashiwada, Tomonori, c/o Yokohama Works of, Yokohama-shi, Kanagawa (JP); Shigematsu, Masayuki, c/o Yokohama Works of, Yokohama-shi, Kanagawa (JP)
(74) Representative: Lehn, Werner, Dipl.-Ing.

(56) References cited:
- PATENT ABSTRACTS OF JAPAN vol. 15, no. 480 (P-1284)5 December 1991
- ELECTRONICS LETTERS. vol. 26, no. 22, 25 October 1990, STEVENAGE GB pages 1851 - 1853 K. KIKUCHI 'Generalised formula for optical-amplifier noise and its application to erbium-doped fibre amplifiers'
- JOURNAL OF LIGHTWAVE TECHNOLOGY. vol. 9, no. 10, October 1991, NEW YORK US pages 1321 - 1329 I.M.I. HABBAB ET AL. 'Optimized performance of erbium-doped fiber amplifiers in subcarrier multiplexed lightwave AM-VSB CATV systems'
- PATENT ABSTRACTS OF JAPAN vol. 15, no. 115 (P-1181)19 March 1991
- PATENT ABSTRACTS OF JAPAN vol. 15, no. 334 (E-1104)26 August 1991

## Description

### BACKGROUND OF THE INVENTION

### Field of the Invention

The present invention relates to an optical fiber amplifier which is capable of gain adjustment while monitoring the optical output of an optical fiber doped with an active material such as Er.

### Related Background Art

An optical fiber amplifier doped with a rare earth element such as erbium (Er) as an active material is expected to be used in various fields. For example, a great deal of attention has been paid to the application of this device to a line amplifier for a long-distance communication system. Such a line amplifier is generally characterized by proper signal gain and signal output. However, the noise figure (NF) of this line amplifier must be kept as small as possible.

The above-mentioned line amplifier is designed to be operated by using an automatic output power control (APC) mechanism. The signal output of the line amplifier is kept at a predetermined level independently of a signal input which varies depending on the total attenuation amount of light at the input cable portion. Therefore, a variable optical attenuator can be used for signal gain adjustment. However, in consideration of a simpler, more economical operation, signal gain adjustment is performed by controlling the pumping light output incident on an amplifying optical fiber constituting a line amplifier.

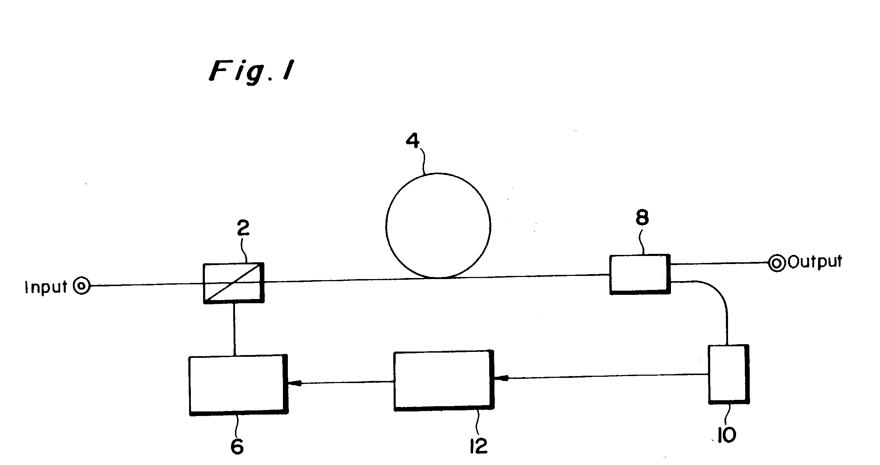

Fig. 1 shows a general arrangement of such a line amplifier. Input signal light is incident on an Er-doped fiber (EDF) 4 through a multiplexer 2. Pumping light from a light source 6 constituted by a laser diode is incident on the EDF 4 through the multiplexer 2 to pump Er. The input signal light amplified by stimulated emission of pumped Er is output externally, as output signal light, through a splitter 8 constituted by an optical directional coupler. In this case, part of the output signal light is monitored, as one output light component from the splitter 8, by a photodiode 10, and is fed back to a light source 6 through an APC circuit 12. With this operation, the optical output of the optical fiber amplifier can be kept constant.

### SUMMARY OF THE INVENTION

The inventors of the present invention analyzed the relationship between the length of an Er-doped fiber, signal gain, NF, input pump power, and the like of an optical fiber amplifier. As a result, the following facts were found.

Provided that the length of an Er-doped fiber (EDF) is constant, the NF value is almost constant when the input pump power is sufficiently high. If, however, the input pump power is low, the NF increases (deteriorates) as compared with the NF at sufficiently high input pump power. Such a deterioration is considered to cause a decrease in the probability of population inversion of the EDF. It is generally known that the gain of the Er-doped fiber amplifier (EDFA) is substantially determined by input pump power to the EDF and the length of the EDF.

It is, therefore, apparent that the EDFA can be used within a proper NF range by preventing the input pump power from decreasing to a predetermined value or less.

If the input pump power to a conventional EDFA decreases to the predetermined value or less, in order to obtain a desired gain range, the EDFA can always be used within a proper NF range by the following operation. After the gain is increased to "desired gain + value A" by increasing the input pump power, gain control is performed by an attenuator to reduce the gain by the value A.

The present invention has been made on the basis of the above-described analysis result obtained by the inventors.

JP-A-3005731 shows features corresponding to those of the preamble of claim 1.

JP-A-3206427 shows controlling a variable optical attenuator by comparing the input with a reference, to hold the output level constant.

According to the present invention, there is provided an optical fiber amplifier as set out in claim 1.

In the optical fiber amplifier described above, since the optical attenuation means is arranged on the output end side of the optical fiber, the pumping light output is set to be high in advance. Therefore, even_if the gain of signal light varies over a wide range, a decrease in the probability of population inversion of the EDF can be prevented, and the noise figure can be stably kept small.

In the above optical fiber amplifier, by setting the attenuation amount of the attenuation means with respect to signal light to be 5 dB or more, a decrease in the probability of population inversion of the EDF can be prevented more effectively, and the noise figure can be stably kept small.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art form this detailed description.

### BRIEF DESCRIPTION OF THE DRAWINGS

Fig. 1 is a block diagram showing the arrangement of a conventional optical fiber amplifier;
Fig. 2 is a block diagram showing the arrangement of an optical fiber amplifier according to the first embodiment of the present invention;
Fig. 3 is a graph for explaining an operation of the optical fiber amplifier of the present invention;
Fig. 4 is a graph for explaining an operation of the optical fiber amplifier of the present invention;
Fig. 5 is a graph for explaining an operation of the optical fiber amplifier of the present invention;
Fig. 6 is a graph showing a case wherein the optical fiber amplifier of the present invention is used as a line amplifier;
Fig. 7 is a block diagram showing the arrangement of an optical fiber amplifier according to the second embodiment of the present invention;
Fig. 8 is a block diagram showing the arrangement of an optical fiber amplifier according to the third embodiment of the present invention; and
Figs. 9 to 14 are views, each showing an arrangement of an attenuation means used in the present invention.

### DETAILED DESCRIPTION OF THE PREFERRED EMBODIMENTS

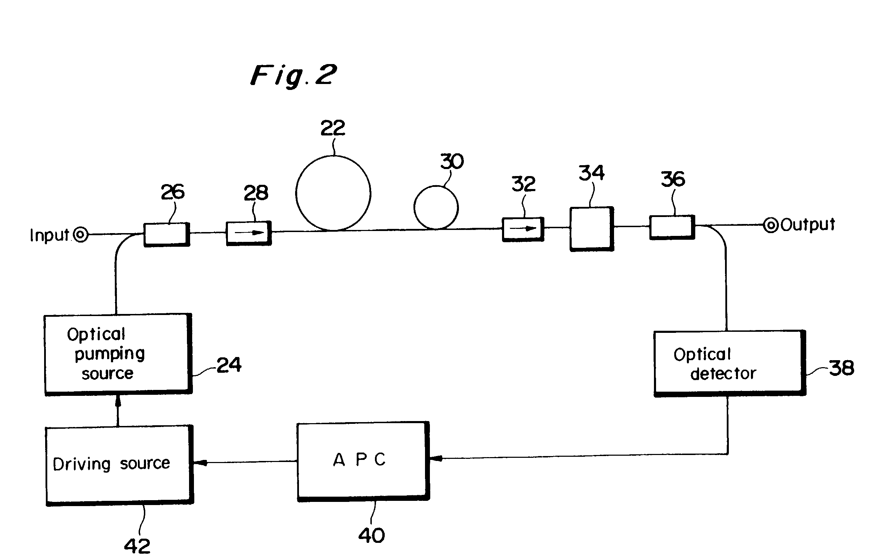

Fig. 2 shows the arrangement of an optical fiber amplifier according to the first embodiment of the present invention. An Er-doped fiber 22 is a single-mode (SM) fiber comprising a quartz-based material. The core portion of the Er-doped fiber 22 is doped with Er for optical amplification. An optical pumping source 24 constituted by a semiconductor laser emits 1.48-µm pumping light for pumping Er in the core portion of the Er-doped fiber 22. A multiplexer 26 constituted by a 1.48/1.55-µm multiplexing fiber coupler of a fused taper type multiplexes the pumping light from the optical pumping source 24 and signal light having a wavelength of 1.55 µm, and couples them to the Er-doped fiber 22 through an optical isolator 28.

The signal light amplified within the Er-doped fiber 22 is coupled to a high-loss optical fiber 30 connected to the output terminal of the Er-doped fiber 22. In the high-loss optical fiber 30, the signal light is attenuated by several dB or more. The amplified signal light emerging from the high-loss optical fiber 30 passes through an optical isolator 32 for preventing return light, and a bandpass filter 34 for cutting noise light and pumping light. Subsequently, the light signal is incident on a splitter 36 constituted by a branch fiber coupler. Part of the signal light split by the splitter 36 is monitored by a photodetector 38 constituted by a photodiode.

A control circuit 40 controls a driving source 42 on the basis of the monitor output from the photodetector 38. More specifically, the control circuit 40 adjusts the output of the optical pumping source 24 by adjusting a driving current supplied it. By adjusting the output of the optical pumping source 24 in this manner, the gain of the optical fiber amplifier can be controlled to keep its output signal power constant.

An operation of the optical fiber amplifier shown in Fig. 2 will be described below. Pumping light from the optical pumping source 24 is incident on the Er-doped fiber 22 through the multiplexer 26 and the optical isolator 28, thus pumping Er. If input signal light is incident on the Er-doped fiber 22 through the optical isolator 28 in this state, the signal light is amplified by stimulated emission of pumped Er in the Er-doped fiber 22. This amplified signal light is attenuated by the high-loss optical fiber 30 and is output externally through the optical isolator 32, the bandpass filter 34, and the splitter 36. Meanwhile, part of the amplified signal light is split by the splitter 36, and is fed back to the driving source 42 of the optical pumping source 24 to be used to adjust the gain of the optical fiber amplifier. With this operation, the output signal power is kept constant. In this case, the output signal power is the average light intensity per unit time.

In this case, since the high-loss optical fiber 30 is connected to the output terminal of the Er-doped fiber 22, the noise figure of the optical fiber amplifier can be stably kept small throughout a wide range of input signal light intensities. That is, in the optical fiber amplifier of the embodiment, the high-loss optical fiber 30 is used, and the gain of the Er-doped fiber 22 is set to be higher than the overall gain of the optical fiber amplifier. Even if, therefore, the overall gain of the optical fiber amplifier is decreased by strong input signal light, the gain of the Er-doped fiber 22 is kept relatively high. An operation of the optical fiber amplifier which is performed while the gain is kept high is equivalent to an operation performed while the probability of population inversion of Er in the Er-doped fiber 22 is always kept high. Therefore, the noise figure of the optical fiber amplifier is stably kept small.

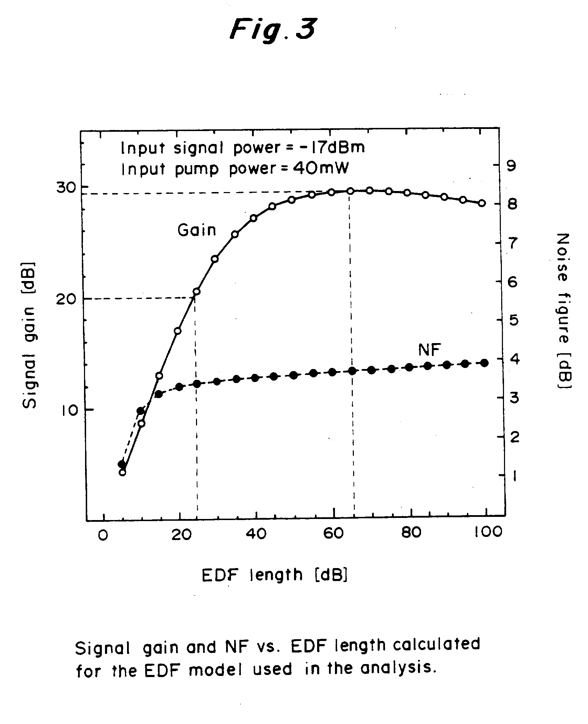

For reference, Figs. 3 to 5 show results obtained by theoretical calculations concerning various characteristics, e.g., NF characteristics, of the optical fiber amplifier in Fig. 2. The signal gains and the NF values were calculated by using the formulae provided by Kikuchi (K. Kikuchi, Electron. Lett., Vol. 26, No. 22, p. 1851 (1990)). Note that only signal light-spontaneous beat noise components were taken into consideration in the calculations.

It was assumed that the required amplifier performance was specified by an output signal power of +3 dBm (constant) and a maximum gain of 20 dB for 40-mW input pump power to the Er-doped fiber. Note that the minimum value of input signal power is set to be -17 dBm.

Fig. 3 is a graph showing changes in the signal gain (white circles) and NF (black circles) of the optical fiber amplifier vs. the length of the Er-doped fiber 22. In this case, the input signal power to the Er-doped fiber 22 was set to be -17 dBm (the lower limit in the operation range), and the input pump power was set to be 40 mW. Other conditions were set to be the same as those for a general optical fiber.

In these conditions, the fiber length at which the maximum gain can be obtained is 65 m. In this case, a gain of 29.3 dB can be obtained. Assume that in the amplifier of the present invention shown in Fig. 2, the loss of the high-loss optical fiber 30 is 9.3 dB (gain = -9.3 dB).

With this arrangement, a gain of 20 dB (output signal power = +3 dBm) can be obtained as the gain of the overall amplifier of the present invention under the conditions of an input signal power of -17 dBm and an input pump power of 40 mW.

It is apparent from the graph that an amplifier obtained by omitting the high-loss optical fiber 30 from the optical fiber amplifier in Fig. 2, i.e., the conventional optical fiber amplifier in Fig. 1, requires a 24-m long Er-doped fiber which is shorter than the Er-doped fiber used in the amplifier of the present invention.

In this case, a reduction in the length of the Er-doped fiber 22 leads to a slight decrease in NF value.

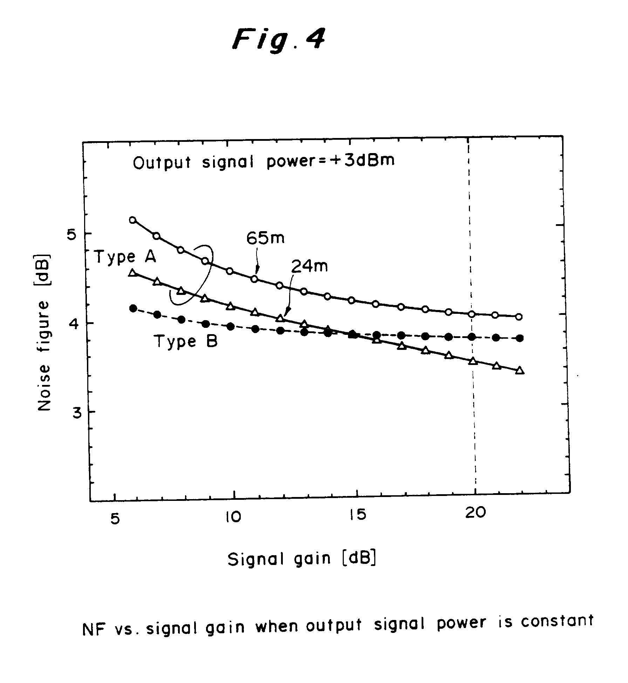

Fig. 4 is a graph showing the relationship between the signal gain and NF of the optical fiber amplifier. Curves of type A (white triangles and white circles) indicate calculation results associated with the conventional optical fiber amplifier (without the high-loss optical fiber 30). A curve of type B (black circles) indicates a calculation result associated with the optical fiber amplifier of the embodiment using the high-loss optical fiber 30 (-9.3 dB). At a signal gain of 20 dB, the optical fiber amplifier using the 24-m long Er-doped fiber has the smallest NF, and the optical fiber amplifier of the embodiment using the 65-m long Er-doped fiber has the second smallest NF. As the signal gain decreases from 20 dB, the NFs of both the conventional optical fiber amplifiers using the 24-m and 65-m long Er-doped fibers greatly increase (deterioration in NF characteristics). In contrast to this, the NF value of the optical fiber amplifier is kept considerably constant, regardless of variations in signal gain, over a wide range of the variations.

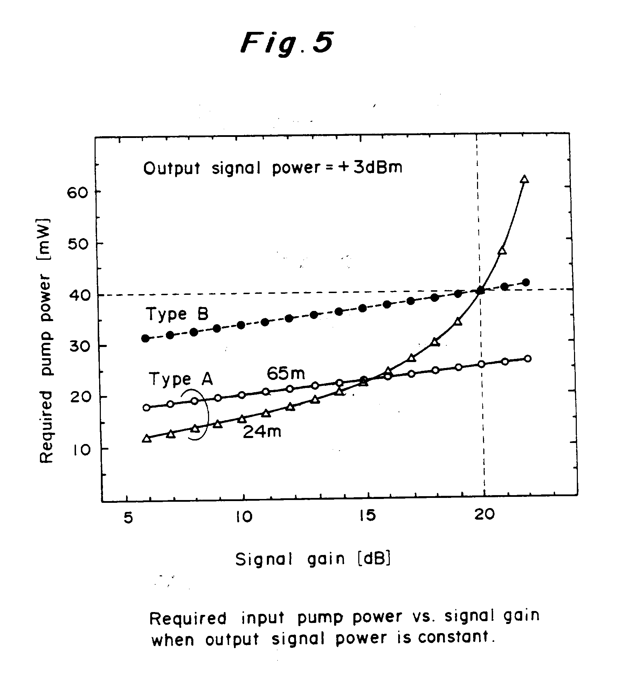

Fig. 5 is a graph showing the input pump power required for the optical fiber amplifier as a function of signal gain. As shown in Fig. 5, when the gain is 20 dB, the input pump power to both the conventional optical fiber amplifier using the 24-m long Er-doped fiber and the optical fiber amplifier of the embodiment using the 65-m long Er-doped fiber becomes 40 mW. In contrast to this, the input pump power to the conventional optical fiber amplifier using the 24-m long Er-doped fiber is rapidly reduced with a reduction in signal gain. Such a reduction in input pump power is advantageous in terms of power consumption. However, if the signal gain exceeds the upper limit even slightly, when the output power limit of the optical pumping source 24 is exceeded, sufficient input pump power cannot be supplied to the optical fiber amplifier.

In the amplifier of the embodiment, the range of input pump power variations with respect to the range of signal gain variations can be small as compared with the conventional amplifier using the 24-m long Er-doped fiber. This means that even a small change in input pump power can sufficiently change the signal gain. That is, when the input signal level incessantly changes, since the input pump power need not be greatly and rapidly changed, the response characteristics of the optical fiber amplifier are relatively stabilized.

In the above-described embodiment, the length of the Er-doped fiber, which is set to be 65 m, is determined as the fiber length at which the maximum gain can be obtained under predetermined conditions (input pump power and the like). However, determination of a fiber length is not limited to such a method. A fiber length may be determined in consideration of the relationship between the operation range and NF of an amplifier. For example, as shown in Fig. 3, the above embodiment uses a combination of the 65-m long Er-doped fiber (gain = 29.3 dB) and the high-loss fiber with a loss of -9.3 dB. However, a 40-m long Er-doped fiber (gain = about 27 dB) and a high-loss fiber with a loss of about -7 dB may be combined together to obtain a gain of 20 dB as the gain of the overall amplifier.

In practice, the maximum gain substantially independent of input pump power is determined by the length of an EDF. For this reason, an EDF longer than a conventional EDF may be used, while the input pump power is kept higher than a predetermined level.

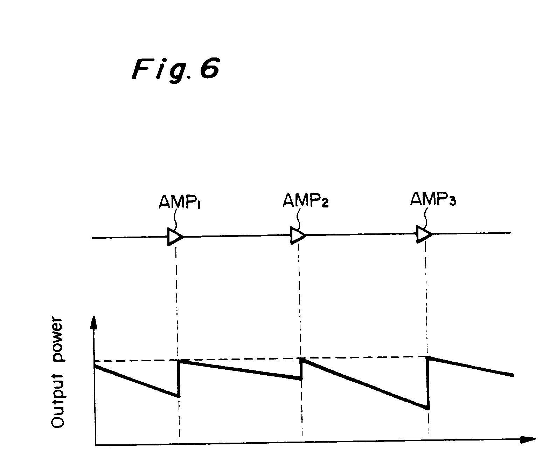

Fig. 6 shows a case wherein the optical fiber amplifier in Fig. 2 is arranged, as a line amplifier, in an actual communication system. As shown in Fig. 6, a plurality of line amplifiers AMP₁, AMP₂, and AMP₃ are arranged between fibers having different transmission losses to compensate for the losses. In this case, the gain of each of the line amplifiers AMP₁, AMP₂, and AMP₃ is adjusted to keep its output signal power constant. High-loss fibers (not shown) are respectively connected to the output terminals of Er-doped fibers constituting the line amplifiers AMP₁, AMP₂, and AMP₃ so that the noise figure of each amplifier is stably kept small regardless of the intensity of signal light input to the amplifier. Therefore, in such a communication system, the characteristics of signal light do not deteriorate even in long-distance transmission.

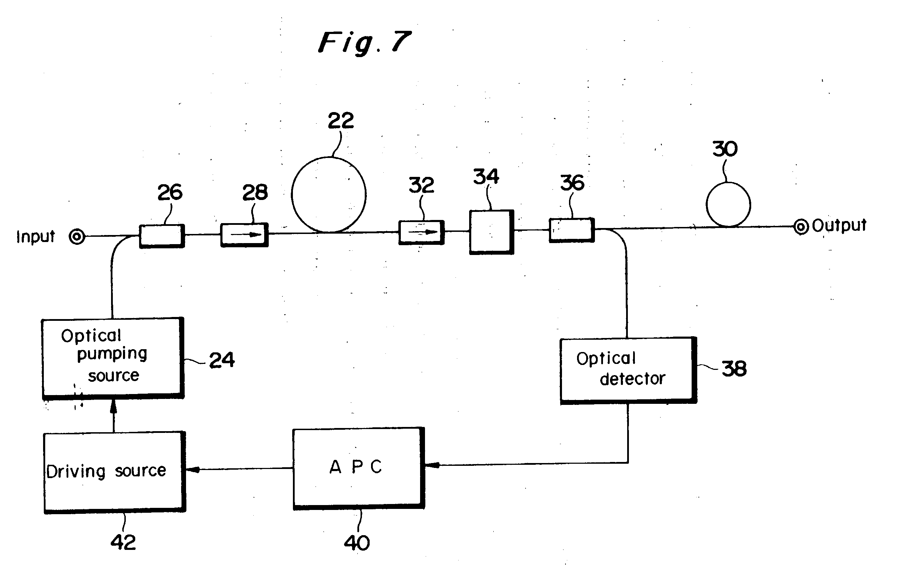

In the first embodiment shown in Fig. 2, the high-loss optical fiber 30 as an attenuator is arranged in the APC feedback loop. However, the high-loss optical fiber 30 may be arranged at any position within the signal output path after the Er-doped fiber. The high-loss optical fiber 30 as an attenuator may be arranged outside the APC feedback loop, as in the second embodiment shown in Fig. 7.

The arrangement shown in Fig. 7 will be briefly described below. A difference in arrangement between the first and second embodiments is that a high-loss optical fiber 30 identical to the high-loss optical fiber 30 between the Er-doped fiber 22 and the optical isolator 32 in Fig. 2 is arranged between a photocoupler 36 and a signal light output terminal. Note that since the light intensity detected by a photodetector 38 increases with a reduction in attenuation in the high-loss optical fiber 30, an APC 40 must perform a control operation in consideration of this increase in intensity. According to this embodiment, the same effects as those obtained in the first embodiment can be obtained.

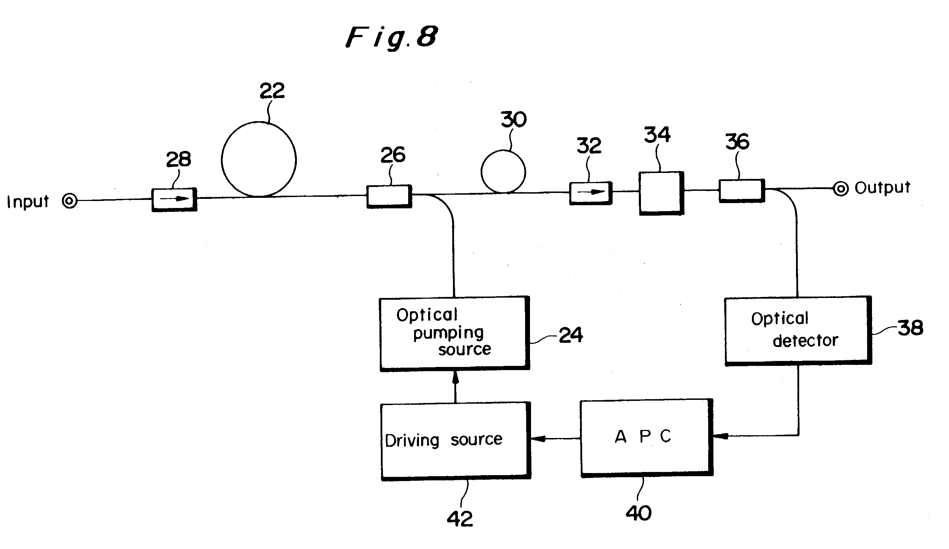

Fig. 8 shows the third embodiment, in which backward pumping is performed with respect to an Er-doped fiber. A difference in arrangement between the first and third embodiments is that a photocoupler 26 identical to the photocoupler 26 between the signal input light input terminal and the optical isolator 28 in Fig. 2 is arranged between an Er-doped fiber 22 and a loss fiber 30 in Fig. 8. In this arrangement, pumping light from an optical pumping source 24 is input to the Er-doped fiber 22 from its signal light output terminal side (backward) through the photocoupler 26.

The first and third embodiments may be combined so that pumping light is input from two sides, i.e., the front and rear sides, of the Er-doped fiber 22.

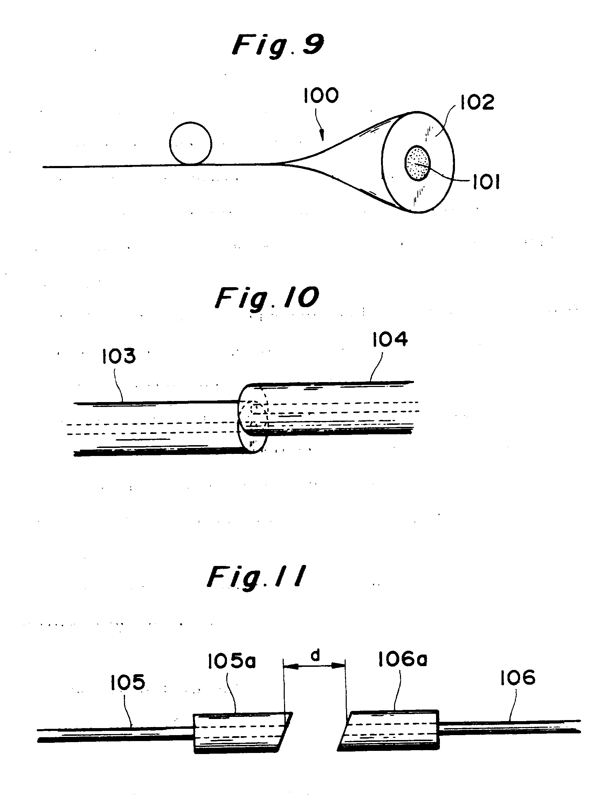

The high-loss fiber used as an attenuator in the above embodiments will be described below. Fig. 9 shows a high-loss optical fiber 100 constituted by a core portion 101 and a cladding portion 102. The core portion 101 is doped with an impurity which absorbs signal light, e.g., Yb or Tm. In general, such a fiber can be easily formed. In addition, since the loss per unit length can be easily estimated, the length of the fiber can be determined in accordance with a desired loss. This greatly facilitates the design associated with attenuation amount.

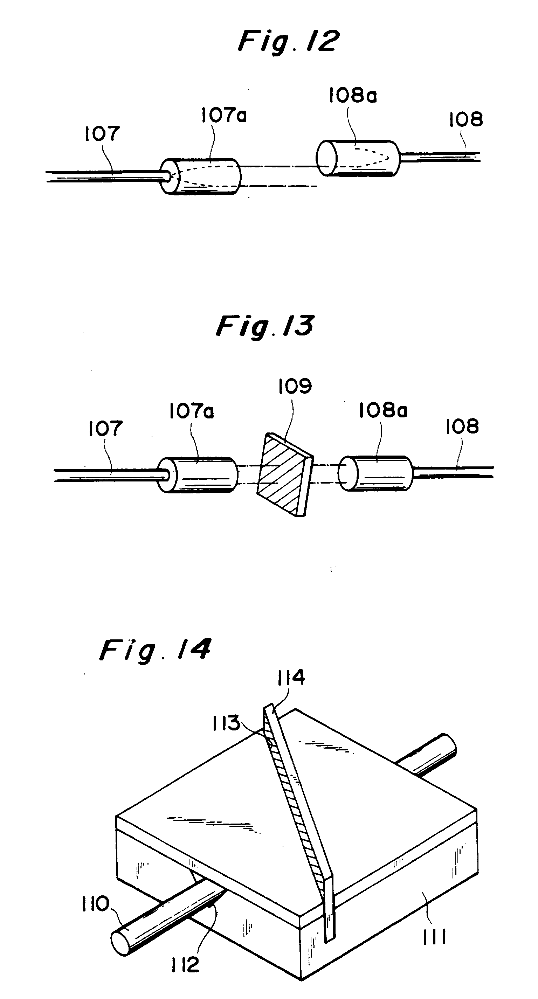

Furthermore, an attenuation method using no high-loss fiber may be used. For example, a method of attenuating a signal by intentionally increasing the connection loss may be used. Fig. 10 shows a method of connecting the core portion of an optical fiber 103 to the core portion of an optical fiber 104 by fusion such that the core portions are offset from each other to intentionally cause an optical axis misalignment.

Fig. 11 shows a method in which an optical fiber 105 having an obliquely polished ferrule 105a at its end portion is connected to an optical fiber 106 having an obliquely polished ferrule 106a such that they oppose each other at a distance d. According to this method, the attenuation amount can be changed by changing the distance d.

Fig. 12 shows a method of connecting an optical fiber 107 having a SELFOC lens 107a at its end portion to an optical fiber 108 having a SELFOC lens 108a at its end portion. In this method, signal light is collimated by the SELFOC lenses 107a and 108a so that a desired attenuation amount can be obtained by misaligning the optical axes of these lenses from each other.

In the method in Fig. 12, the optical axes of the two fibers are misaligned from each other. However, a fixed attenuation filter 109 may be inserted between the SELFOC lenses 107a and 108a (Fig. 13).

Fig. 14 shows still another method. In this method, one optical fiber 110 is buried and fixed in a V-shaped groove 112 formed in an Si substrate 111. Thereafter, a groove 113 is formed across the optical fiber 110. A fixed attenuation filter 114 is inserted and fixed in the groove 113.

In addition to the above-described arrangements for attenuation, attenuators used in the present invention can be constituted by various other known optical components.

In each embodiment described above, an Er-doped fiber is used as an optical fiber for optical amplification. However, optical fibers doped with other active materials such as Nd and Pr may be used.

The attenuation amount of an optical attenuator can be arbitrarily set in accordance with the application of the optical fiber amplifier. If the attenuation amount is set to be 5 dB or more, the NF can be satisfactorily kept small.

As has been described above, according to the optical fiber amplifier of the present invention, since the optical attenuation means is arranged on the output terminal side of the optical fiber, the pumping light output is set to be high in advance. Therefore, the gain of signal light varies over a wide range, a decrease in the probability of population inversion of the EDF can be prevented, and the noise figure can be stably kept small.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

## Claims

1. An optical fiber amplifier comprising:
an optical pumping source (24) for generating pumping light;
a doped optical fiber (22) doped with an active material capable of amplifying passing light when the pumping light is applied;
and control means (40) for controlling the pumping light from said optical pumping source on the basis of light from said doped optical fiber;
characterized by attenuation means (30) arranged in the output path from the doped optical fiber, for attenuating light from said doped optical fiber by a predetermined attenuation amount, for preventing a decrease in the probability of population inversion of the doped optical fiber when the gain of a signal light to be amplified varies and keeping the noise figure of the optical amplifier stably small.

2. An optical fiber amplifier according to claim 1, further comprising monitor means (38) for monitoring light from said attenuation means, and
wherein said control means is for controlling the pumping light from said optical pumping source on the basis of information from said monitor means.

3. An optical fiber amplifier according to claim 2, wherein said control means controls a time average value of intensities of a signal component in the light from said attenuation means to be constant.

4. An optical fiber amplifier according to claim 2, further comprising splitting means (36) for splitting the light from attenuation means into two light components, one light component being input to said monitor means, and the other light component being output externally.

5. An optical fiber amplifier according to claim 2, further comprising a filter (34) for cutting the pumping light included in the light from said doped optical fiber or from said attenuation means.

6. An optical fiber amplifier according to claim 2, wherein said attenuation means is an optical fiber (30) having a high loss.

7. An optical fiber amplifier according to claim 2, wherein said monitor means is a photodiode.

8. An optical fiber amplifier according to claim 2, wherein the predetermined attenuation amount is not less than 5 dB.

9. An optical fiber amplifier according to claim 2, wherein the active material is a rare earth element.

10. An optical fiber amplifier according to claim 9, wherein the active material is Er.

11. An optical fiber amplifier according to claim 1, further comprising monitor means (38) for monitoring light from said doped optical fiber, and
wherein said control means is for controlling the pumping light from said optical pumping source on the basis of information from said monitor means.

12. An optical fiber amplifier according to claim 11, wherein said control means controls a time average value of intensities of light from said attenuation means to be constant.

13. An optical fiber amplifier according to claim 11, further comprising splitting means (36) for splitting light from said doped optical fiber into two light components, one light component being input to said monitor means, and the other light component being input to said attenuation means.

14. An optical fiber amplifier according to claim 11, further comprising a filter (34) for cutting the pumping light included in light from said doped optical fiber or from said attenuation means.

15. An optical fiber amplifier according to claim 11, wherein said attenuation means is an optical fiber having a high loss.

16. An optical fiber amplifier according to claim 11, wherein said monitor means is a photodiode.

17. An optical fiber amplifier according to claim 11, wherein the predetermined attenuation amount is not less than 5 dB.

18. An optical fiber amplifier according to claim 11, wherein the active material is a rare earth element.

19. An optical fiber amplifier according to claim 18, wherein the active material is Er.

## Patentansprüche

1. Optikfaserverstärker mit:
einer optischen Pumpquelle (24) zum Erzeugen von Pumplicht;
einer dotierten optischen Faser (22), dotiert mit einem aktiven Material, das in der Lage ist, durchtretendes Licht zu verstärken, wenn das Pumplicht angelegt ist;
und einer Steuereinrichtung (40) zum Steuern des Pumplichts von der optischen Pumpquelle auf der Basis von Licht von der dotierten optischen Faser;
**gekennzeichnet** durch
eine Abschwächungseinrichtung (30), die angeordnet ist im Ausgabeweg von der dotierten optischen Faser, zum Abschwächen von Licht von der dotierten optischen Faser um einen bestimmten Abschwächungsbetrag, zum Verhindern einer Abnahme in der Wahrscheinlichkeit der Populationsinversion der dotierten optischen Faser, wenn die Verstärkung eines zu verstärkenden Signallichtes variiert, und Halten der Rauschfigur des Optikfaserverstärkers auf stabile Art und Weise klein.

2. Optikfaserverstärker nach Anspruch 1, gekennzeichnet durch eine Überwachungseinrichtung (36) zum Überwachen von Licht von der Abschwächungseinrichtung,
wobei die Steuereinrichtung zum Steuern des Pumplichts von der optischen Pumpquelle auf der Basis von Information von der Überwachungseinrichtung dient.

3. Optikfaserverstärker nach Anspruch 2, dadurch gekennzeichnet, daß die Steuereinrichtung einen Zeitmittelwert von Intensitäten einer Signalkomponente in dem Licht von der Abschwächungseinrichtung auf eine Konstante steuert.

4. Optikfaserverstärker nach Anspruch 2, gekennzeichnet durch eine Aufspaltungseinrichtung (36) zum Aufspalten des Lichts von der Abschwächungseinrichtung in zwei Lichtkomponenten, wobei eine Lichtkomponente eingegeben wird an die Überwachungseinrichtung und die weitere Lichtkomponente extern ausgegeben wird.

5. Optikfaserverstärker nach Anspruch 2, gekennzeichnet durch einen Filter (34) zum Abschneiden des Pumplichts, der beinhaltet ist im Licht der dotierten optischen Faser, oder von der Abschwächungseinrichtung.

6. Optikfaserverstärker nach Anspruch 2, dadurch gekennzeichnet, daß die Abschwächungseinrichtung eine optische Faser (30) mit einem hohen Verlust ist.

7. Optikfaserverstärker nach Anspruch 2, dadurch gekennzeichnet,daß eine Überwachungseinrichtung eine Photodiode ist.

8. Optikfaserverstärker nach Anspruch 2, dadurch gekennzeichnet, daß der vorbestimmte Abschwächungsbetrag nicht geringer als 5 dB ist.

9. Optikfaserverstärker nach Anspruch 2, dadurch gekennzeichnet, daß das aktive Material ein seltenes Erdelement ist.

10. Optikfaserverstärker nach Anspruch 9, dadurch gekennzeichnet, daß das aktive Material Er ist.

11. Optikfaserverstärkernach Anspruch 1, gekennzeichnet durch eine Überwachungseinrichtung (38) zum Überwachen von Licht von der dotierten optischen Faser,
wobei die Steuereinrichtung zum Steuern des Pumplichts von einer optischen Pumpquelle auf der Basis von Information der Überwachungseinrichtung dient.

12. Optikfaserverstärker nach Anspruch 12, dadurch gekennzeichnet, daß die Steuereinrichtung einen Zeitmittelwert von Intensitäten von Licht von der Abschwächungseinrichtung auf eine Konstante steuert.

13. Optikfaserverstärker nach Anspruch 11, gekennzeichnet durch eine Aufspaltungseinrichtung (26) zum Aufspalten von Licht von der dotierten optischen Faser in zwei Lichtkomponenten, wobei eine Lichtkomponente an die Überwachungseinrichtung eingegeben wird und die weitere Lichtkomponente an die Abschwächungseinrichtung abgegeben wird.

14. Optikfaserverstärker nach Anspruch 11, gekennzeichnet durch einen Filter (34) zum Abschneiden des Pumplichts, das beinhaltet ist in dem Licht von der dotierten optischen Faser, oder von der Abschwächungseinrichtung.

15. Optikfaserverstärker nach Anspruch 11, dadurch gekennzeichnet, daß die Abschwächungseinrichtung eine optische Faser mit einem hohen Verlust ist.

16. Optikfaserverstärker nach Anspruch 11, dadurch gekennzeichnet, daß die Überwachungseinrichtung eine Photodiode ist.

17. Optikfaserverstärker nach Anspruch 12, dadurch gekennzeichnet, daß der vorbestimmte Abschwächungsbetrag nicht geringer als 5 dB ist.

18. Optikfaserverstärker nach Anspruch 11, dadurch gekennzeichnet, daß das aktive Material ein seltenes Erdelement ist.

19. Optikfaserverstärker nach Anspruch 18, dadurch gekennzeichnet, daß das aktive Material Er ist.

## Revendications

1. Amplificateur à fibre optique comprenant :
une source de pompage optique (24) destinée à générer une lumière de pompage ;
une fibre optique dopée (22) dopée avec un matériau actif apte à amplifier la lumière passante lorsque la lumière de pompage est appliquée ;
et un moyen de commande (40) destiné à commander la lumière de pompage provenant de ladite source de pompage optique sur la base de la lumière provenant de ladite fibre optique dopée ;
caractérisé par un moyen d'atténuation (30) disposé dans le trajet de sortie de la fibre optique dopée et destiné à atténuer la lumière provenant de ladite fibre optique dopée d'une valeur d'atténuation prédéterminée en vue d'empêcher une diminution de la probabilité d'inversion de population de la fibre optique dopée lorsque le gain du signal lumineux qui doit être amplifié varie et de maintenir d'une manière stable le facteur de bruit de l'amplificateur optique à une faible valeur.

2. Amplificateur à fibre optique selon la revendication 1 comprenant, en outre, un moyen de surveillance (38) destiné à surveiller la lumière provenant dudit moyen d'atténuation, et
dans lequel ledit moyen de commande est destiné à commander la lumière de pompage provenant de ladite source de pompage optique sur la base des informations provenant dudit moyen de surveillance.

3. Amplificateur à fibre optique selon la revendication 2, dans lequel ledit moyen de commande commande une valeur moyenne dans le temps des intensités d'une composante de signal incluse dans la lumière provenant dudit moyen d'atténuation de manière à ce qu'elle soit constante.

4. Amplificateur à fibre optique selon la revendication 2 comprenant, en outre, un moyen de séparation (36) destiné à séparer la lumière provenant du moyen d'atténuation en deux composantes lumineuses, une composante lumineuse étant entrée dans ledit moyen de surveillance et l'autre composante lumineuse étant envoyée vers l'extérieur.

5. Amplificateur à fibre optique selon la revendication 2 comprenant, en outre, un filtre (34) destiné à couper la lumière de pompage incluse dans la lumière provenant de la fibre optique dopée ou provenant dudit moyen d'atténuation.

6. Amplificateur à fibre optique selon la revendication 2, dans lequel ledit moyen d'atténuation est une fibre optique (30) présentant une forte perte.

7. Amplificateur à fibre optique selon la revendication 2, dans lequel ledit moyen de surveillance est une photodiode.

8. Amplificateur à fibre optique selon la revendication 2, dans lequel la valeur d'atténuation prédéterminée n'est pas inférieure à 5 dB.

9. Amplificateur à fibre optique selon la revendication 2, dans lequel le matériau actif est un élément de terre rare.

10. Amplificateur à fibre optique selon la revendication 9, dans lequel le matériau actif est Er.

11. Amplificateur à fibre optique selon la revendication 1 comprenant, en outre, un moyen de surveillance (38) destiné à surveiller la lumière provenant de ladite fibre optique dopée, et
dans lequel ledit moyen de commande est destiné à commander la lumière de pompage provenant de ladite source de pompage optique sur la base des informations provenant dudit moyen de surveillance.

12. Amplificateur à fibre optique selon la revendication 11, dans lequel ledit moyen de commande commande la valeur moyenne dans le temps des intensités de la lumière provenant dudit moyen d'atténuation de manière à ce qu'elle soit constante.

13. Amplificateur à fibre optique selon la revendication 11 comprenant, en outre, un moyen de séparation (36) destiné à séparer la lumière provenant de ladite fibre optique dopée en deux composantes lumineuses, une composante lumineuse étant entrée dans ledit moyen de surveillance et l'autre composante lumineuse étant entrée dans ledit moyen d'atténuation.

14. Amplificateur à fibre optique selon la revendication 11 comprenant, en outre, un filtre (34) destiné à couper la lumière de pompage incluse dans la lumière provenant de ladite fibre optique dopée ou provenant dudit moyen d'atténuation.

15. Amplificateur à fibre optique selon la revendication 11, dans lequel ledit moyen d'atténuation est une fibre optique présentant une forte perte.

16. Amplificateur à fibre optique selon la revendication 11, dans lequel ledit moyen de surveillance est une photodiode.

17. Amplificateur à fibre optique selon la revendication 11, dans lequel la valeur d'atténuation prédéterminée n'est pas inférieure à 5 dB.

18. Amplificateur à fibre optique selon la revendication 11, dans lequel le matériau actif est un élément de terre rare.

19. Amplificateur à fibre optique selon la revendication 18, dans lequel le matériau actif est Er.
